# EUROPEAN PATENT SPECIFICATION

(11) **EP 4 415 524 B1**
(45) Date of publication and mention of the grant of the patent: **11.11.2026**
(21) Application number: 22793788.5
(22) Date of filing: 11.10.2022
(51) Int. Cl.: A01G 13/28

(54) **PLANT SHELTER**
PFLANZENSCHUTZ
ABRI POUR PLANTES

(30) Priority: 11.10.2021 GB 202114514; 02.12.2021 GB 202117452
(43) Date of publication of application: 21.08.2024
(73) Proprietor: BMP Europe Ltd., Accrington Lancashire BB5 5YH (GB)
(72) Inventor: CONNELL, Leanne Bernadette, Accrington BB5 5YH (GB)
(74) Representative: WP Thompson
(86) International application number: PCT/GB2022/052571
(87) International publication number: WO 2023/062355

(56) References cited:
- WO-A1-2008/052913
- WO-A1-2020/227783
- DE-U1- 9 216 676
- GB-A- 2 586 914
- US-A1- 2010 015 365
- US-A1- 2020 217 010

## Description

The present invention relates to a plant shelter. More particularly, the invention relates to biodegradable shelters, such as biodegradable tree shelters, to kits comprising such shelters and to the use of such shelters.

Shelters may be used to provide protection for plants. Typically, vulnerable plants such as tree saplings may be planted within or partially within a shelter to provide physical protection against wind, frost, human or animal damage, and/or agrochemicals (such as herbicides, pesticides, liming and acidifying agents and the like). Optionally, a supportive splint is also applied. Once the plant is no longer considered vulnerable the shelter is removed. For tree saplings, this may conventionally be after a period of around 2 to 10 years depending on the plant species concerned. Commonly there may be a need to remove the shelter within 5 years, such as after a period of around 3 years. The removal of the shelter may permit the plant to continue to grow unfettered by the confines of the shelter. In addition, there may be a need to remove shelters to avoid polluting the environment at the end of their life.

In order to enable plants to grow, known shelters are conventionally formed from a transparent or translucent materials, such that any leaves housed within the shelter may access sunlight.

As such conventional tree shelters include transparent or translucent plastic tubular structures which are secured about a young tree. Typically, a stake or pole is affixed to the sapling or support with one or more plastic ties and staked into the surrounding ground to maintain the sapling and/or support in an upright position. Such shelters are known to provide a green-house-like micro-climate within the tube that promotes tree growth.

Historically, it was considered that the use of a degradable plastic may be kinder to the environment. Degradable plastic shelters may be collected and recycled at the end of their useful life. Alternatively, once the sapling reaches 2-5 years old the plastic may start to breakdown, losing strength and rigidity and ultimately being dispersed from the sapling as it continues to grow. This process introduces micro and nano-plastics into the environment which may take hundreds or even thousands of years to fully degrade and are now known to be harmful. As a result, there is a need to return and remove such shelters before they disintegrate. This requires detailed records to be maintained listing where and when such tree shelters are used. Effort is then required to collect the shelters at the end of their use. This may be costly where shelters are used in remote locations, adding significantly to the lifetime costs of using such shelters. Moreover, where shelters have been damaged and potentially disbursed during the use of the product over many years, the complete removal of pollutants from the environment may be impossible.

Alternative biodegradable tree shelters are known which may degrade into non-harmful materials, such as compostable materials, in the environment over a number of years avoiding the need to return and collect the shelter. However, such shelters may suffer from poor UV light penetration, which hinders plant growth. In addition, degradation of the shelter may not occur uniformly resulting in entanglement and/or strangulation of growing plants.

WO 87/01904 (Tubex) discloses such a shelter comprising a twin-walled tubular extrusion of UV-degradable polypropylene formed with an out-turned lip or flange at its upper end and a longitudinal V-section channel receiving a stake which is securable by two ratchet-locking cable ties. Overtime the UV-degradable polypropylene will degrade, taking around 5 to 7 years to break apart depending on the local environment. However, once dispersed, micro and/or nano-particles remain for an extended period giving rise to environmental concerns.

WO 91/15946 (Tubex) and EP 0558356 (Tubex) describes somewhat similar tree shelters, having broadly the same environmental concerns.

GB 2586914 discloses a tree shelter formed from biodegradable, compostable materials comprising a natural animal or plant fibre substrate and a matrix of a natural binder (bio-plastic) in which the fibres are held. The natural fibres that are claimed in the granted patent are wool fibres. In order to provide and retain the required supportive properties for an extended period of use, and to enable the device to appropriately decompose, large amounts of fibre substrates are required, resulting in thick-walled shelters which are costly to produce and transport, heavy and/or cumbersome to mount, and significantly limit the amount of UV light which may traverse the shelter to reach a sapling growing inside, hindering plant growth. Such shelters may also breakdown at undesirable rates.

In addition, such shelters are generally used in combination with a stake to secure the shelter to the ground and/or maintain the sapling or plant in a generally upright position. This requires the use of mounting components and fixtures which may not be biodegradable and which may retain the need for users to return to the environment to collect any non-biodegradable components to avoid polluting the environment even after any biodegradable components have degraded.

Moreover, the use of animal fibres such as wool can have further cost and environmental implications. In particular, the rearing of animals to produce such fibres required a disproportionate amount of land, may result in environmental damage, climate change and biodiversity loss.

### SUMMARY OF INVENTION

The present invention seeks to provide a solution to one or more of the identified problems by providing an improved shelter for plants, such as a biodegradable shelter. The shelter may be suitable for protecting any suitable plants, such as trees, vines, shrubs, and other plants, or combinations thereof. The present invention is also directed towards a kit comprising such a shelter and the use of such a shelter or kit. While the following is generally described in terms of a tree-shelter, it shall be appreciated that the shelter may be adapted for use with vines, shrubs, and other plants merely by altering the dimensions of the shelter, such as the diameter and height of the shelter.

According to an aspect of the invention, there is provided a plant shelter according to the features of claim 1.

Any suitable woven layer may be used. In one arrangement, the woven layer may be a twill weave or a plain weave. In a further arrangement, the woven layer may be a plain weave. The provision of a woven layer increases the strength and robustness of the wall compared to the provision of a corresponding wall in which the fibres are unbound or are only irregularly and intermittently intertwined. As a result, fewer fibres may be required to yield a suitably robust wall to withstand environmental conditions such as wind, rain, abrasion by animals, the application of horticultural chemicals and the like.

In addition, the woven layer provides an interconnected network of fibres. Each fibre may act as a moisture wick. As such, the woven network of fibres provides a means to draw moisture from an open face of a fibre, such as a cut end, to disperse moisture throughout the entire woven surface. The presence of moisture throughout the interior of the shelter wall enables the wall to degrade internally at portions of the shelter which would otherwise be protected by the presence of the bioplastic. Thus, the shelter is better enabled to break down *in situ* upon exposure to the elements in a timely manner.

In one arrangement, the thread density and thickness of the woven layer may be capable of wicking sufficient moisture to enable the tubular body of the shelter to biodegrade within a pre-determined time period. The time period may be more than 6 months but less than 10 years, such as from 1 year to 9 years, from 18 months to 8 years, from 2 years to 7 years, from 3 years to 6 years and/or from 4 years to 5 years.

In a further arrangement, the fibres may comprise cotton, for example loomstate cotton, *i.e.* cotton which has come off the loom having been woven, but which has not undergone further finishing, washing and/or chemical treatment. Loomstate cotton may be formed from 100% cotton. Typically, the fibres may not be formed from animals, such as wool.

In another arrangement, the fibres may comprise a woven sheet of cotton fabric wherein the woven cotton comprises from 40 to 80 strands per inch in the warp and/or the weft. In some arrangements, the woven sheet may comprise from 50 to 70 strands per inch in the warp and/or the weft, from 55 to 65 strands per inch in the warp and/or the weft, from 60 to 62 strands per inch in the warp and/or the weft or about 60 strands per inch in one or both of the warp or weft. Here the term "about" may be construed as encompassing fabrics wherein the average number of stands per inch in wither the weft or warp is 60 when taken to the nearest 10.

In another arrangement, the loomstate weight may be from 140 to 450 gsm. For example, the loomstate weight may range from 140 to 170 gsm, from 145 to 165 gsm, from 150 to 160 gsm, or from 152 to 158 gsm. In other embodiments the loomstate weight may range from 170 to 450 gsm, from 180 to 440 gsm, from 190 to 430 gsm, from 200 to 420 gsm, from 210 to 410 gsm, from 220 to 400 gsm, from 230 to 390 gsm, from 240 to 380 gsm, from 250 to 370 gsm, from 260 to 360 gsm, from 270 to 350 gsm, from 280 to 340 gsm, from 290 to 330 gsm, from 300 to 320 gsm, preferably from 250 to 350 gsm or from 275 to 325 gsm. Alternatively, the loomstate weight may be about 145 gsm, about 146, gsm, about 147 gsm, about 148 gsm, about 149 gsm, about 150 gsm, about 151 gsm, about 152 gsm, about 153 gsm, about 154 gsm, about 155 gsm, about 156 gsm, about 157 gsm, about 158 gsm, about 159 gsm, about 160 gsm, about 161 gsm, about 162 gsm, about 163 gsm, about 164 gsm, about 165 gsm, about 170 gsm, about 180 gsm, about 190 gsm, about 200 gsm, about 210 gsm, about 220 gsm, about 230 gsm, about 240 gsm, about 250 gsm, about 260 gsm, about 270 gsm, about 280 gsm, about 290 gsm, about 300 gsm, about 310 gsm, about 320 gsm, about 330 gsm, about 340 gsm, about 350 gsm, about 360 gsm, about 370 gsm, about 380 gsm, about 390 gsm, about 400 gsm, about 410 gsm, about 420 gsm, about 430 gsm, about 440 gsm, or about 450 gsm, preferably about 156 gsm. Here, the term "about" may be construed as encompassing weights ±5% due to measurement errors.

In some arrangements, the woven fibres may comprise 60/60 loomstate cotton. For example, the tree shelter may comprise 60/60 loomstate cotton in combination with a polyester polyol, such as a pine-based polyol, for example Lawter's Pine-Pol^{™} A220 (SDS number 300000021591).

Pine-Pol^{™} A220 may be obtained from Lawter BVBA and it is a polyester polyol, which is intended to have the strength, rigidity, and thermal insulation properties that are comparable with traditional petroleum-based aromatic polyester polyol foams and high hydrolytic stability. The polyol is also intended not to have unpleasant odours, when compared with polyurethane products.

Any suitable thread thickness may be used. The strand thickness may be the same or different in the warp and weft. For example, the thickness of the strands in both directions may be from metric 5 to metric 50, such as from metric 10 to metric 40, from metric 15 to metric 30 and/or from metric 20 to metric 25. Optionally, the woven fibres may have a 20/20 thickness in the warp and weft, *i.e.* be of metric 20 in both directions. Such threads may be provided in the form of 60/60 loomstate cotton.

Alternatively or additionally, the fibres may comprise a different natural material. For example, suitable materials may include but are not limited to jute (hessian) and hemp. When such fibres are used, the number of stands per inch may be the same as or different from that set out above, and/or the threads may be the same or different thicknesses.

According to the invention, the woven layer is coated. The woven layer may be coated on at least one side by applying a coating of the bioplastic polyurethane to the woven fibres to form a matrix. For example, a bioplastic polyurethane layer may be applied to a sheet of woven fabric formed of fibres as discussed above. In another arrangement, the woven layer may be coated on more than one side.

Optionally, the bioplastic polyurethane may be applied to the woven layer by a knife coating process. In such processes, an excess of coating material is applied to the woven layer, some of which is then removed by a metering blade to achieve the desired coating thickness. The coating can be applied to one or both sides of the woven layer. Such a process may be used to ensure an even coverage of the woven layer with the protective and strengthening bioplastic layer, which may improve the consistency of the lifetime of the product. Where polyurethane is applied to one or both sides of the fabric the polyurethane may soak through the fabric to provide a coated material wherein the fibres are surrounded by polyurethane to provide a polyurethane impregnated fabric.

Knife coating processes may be semi-automated and/or produce a continuous stream or length of coated fabric which may be cut to an appropriate size thereby avoiding the need for more labour-intensive batch processing and ensure the presence of cut edges to enable the embedded fibre matrix access to external water along the cut edge which may then be dispersed throughout the material by a wicking process.

Thus, in this manner, the woven fibres may be strengthened and protected by the bioplastic polyurethane coating to provide a resultant plant support having a suitable strength and rigidity to protect a plant housed within, or partially within, the plant support from damage by the elements, (most notably wind, driving rain or the like), wildlife and the application of horticultural chemicals, while ensuring that there is a sufficient network of fibres to permit the spread of water throughout to all areas of the shelter wall by a wicking process upon ingress of water to the fabric from a cut edge.

Other methods of combining the bioplastic and woven material are also envisaged.

In an alternative arrangement, a further bioplastic, biodegradable polymer may be used in the present invention. For example, the polyurethane as described in each or any embodiment set out in this application may be supplemented and/or partially replaced with another bioplastic, biodegradable polymer. Any alternative bioplastic, biodegradable polymer may be used.

The inventors have surprisingly found that the uniformity of product degradation across an individual shelter and across a batch of multiple shelters can be improved, while also increasing the speed of degradation by the provision of an organised wicking network throughout the shelter walls. At the same time, it was surprisingly found that this could be achieved while also making the shelter walls thinner and lighter as a result of the support provided by woven fibres, thereby increasing the UV permittivity, reducing manufacturing and transport costs and improving the ease of installation, particularly in remote areas where products may need to be carried across rough terrain.

Thus, the use of a woven fabric may enable a more uniform and/or complete degradation of the shelter to be achieved, while also enabling a thinner and/or stronger shelter to be produced.

The shelters produced according to the invention may have any suitable thickness. The shelters may have a wall thickness of less than 1.5mm, while retaining a suitable strength and rigidity to shelter a growing plant such as a tree, shrub, vine or the like for a period of at least a year and generally at least 2 to 3 years, while also biodegrading within 10 years, preferably within 5 years. Furthermore, the biodegradation of the product may be into compostable materials.

In one arrangement, either the bioplastic biodegrabable polymer layer, such as the polyurethane layer, or the plant shelter may comprise plant or fungal materials. In another arrangement, the bioplastic biodegrabable polymer layer may comprise plant or fungal materials. In a further arrangement, the plant shelter may comprise plant or fungal materials, optionally wherein the plant or fungal materials form part of the woven layer or they are impregnated into the plant shelter. The plant or fungal materials may be dispersed into the environment to grow upon the degradation of the shelter. Any suitable plant or fungal materials may be used. In one aspect, the plant or fungal materials may include seeds or spores, such as moss spores. In some arrangements, the shelters may have a wall thickness of less than 1.5 mm, such as a thickness from 0.5 to 1.5 mm, from 0.6 to 1.5 mm, from 0.75 to 1.5 mm, from 0.6 to 1.25 mm and/or from 0.75 to 1.0mm. Preferably, shelters according to the invention may have a wall thickness from about 0.75 to about 1.0 mm, wherein "about" incorporates values equal to the recited value when rounded to the nearest 0.05 mm. It shall be understood that the term "wall thickness" relates to the total thickness of the coat fabric layer.

By providing shelters with walls having thicknesses as set out above, more UV light may be able to penetrate the plant shelter, *i.e.* the walls may be translucent or transparent. As a result, sufficient UV light may be able to penetrate the shelter to enable to a plant housed or partially housed therein to grown. Alternatively, or in addition, the plant shelter may be provided with one or more apertures to permit more light to enter the shelter. In some arrangements, the walls of the shelter may have >50% light transparency, >55% light transparency, >58% light transparency, >60% light transparency, >65% light transparency, or >68% light transparency. Light transparencies for materials may be obtained by measuring the total transmittance in a 0°/hemispherical geometry from 250 nm-2450 nm. In some circumstances, to obtain a detailed review on the UV transparency, data may be provided on report every 50 nm and electronically every 1 nm.

The term aperture includes any region which may permit the passage or more UV light per unit area than the main body of the wall. Thus, apertures may include areas where the woven layer is thinner or where there is a hole extending through the bioplastic polyurethane coated woven layer.

In one arrangement, the aperture may form a die cut hole which extends through the coated woven layer. Any size, number or geometry of apertures may used. For example, 8mm die cut circular holes may be present. Optionally, apertures may also be provided to allow anchor points for the fixing mechanism to pass through the coated fabric layer and around the stake. For example, four 4 x 14mm die cut apertures may be provided for this purpose.

In another arrangement, the apertures may be formed of any suitable shapes. Any suitable geometric and non-geometric shape may be used. In one arrangement, the apertures may comprise one or more cuts or slits in the shelter wall that may be movable by an applied force, for example by a user, the wind or gravity. In another arrangement, the apertures may comprise a C-shaped cuts, chevrons or the like, a portion of which may be folded or collapsed down to create an aperture.

In some arrangements, the shelter wall may comprise one or more filler materials. Preferably, the one or more filler materials are biodegradable. The filler materials may be woven or non-woven. In one arrangement, the filler materials may be non-woven.

Each of the one or more filler materials may biodegrade within a commensurate timeframe as the remainder of the shelter wall, at a faster rate than the remainder of the shelter wall or at a slower rate than the remainder of the shelter wall. Thus, the presence of one or more filler materials may enable the effective lifetime of the shelter to be tailored to a specific purpose. That is, the presence of one or more filler materials may enable the shelter to biodegrade more quickly as a result of enhanced biodegradability of the filler material leading to the provision of points of instability within the shelter wall during the biodegradation process, aiding in its biodegredation. Alternatively, the filler material may provide enhanced strength and rigidity to the shelter wall during the biodegradation process enabling the shelter to maintain a suitable level of strength and rigidity to support a plant for an extended period of time compared to a corresponding shelter absent the filler material.

The location of the filler material may be selected so as to enhance or reduce the lifetime of the shelter wall at particular locations in the shelter wall, i.e. the filler material may be located in one or more designated filler regions. Alternatively, the one or more filler materials may be dispersed throughout the shelter wall, i.e. the entire shelter wall may comprise the filler region. For example, filler material may be located at, around and/or proximate to points of weakness in the shelter, such as surrounding a portion or the entirety of one or more apertures in the shelter wall; at, along to proximate to any join or perforation in the shelter wall or any part thereof; and/or at, along or proximate to a fixing means, wherein by proximate to a fixing means, join, or perforation it is meant that the one or more filler materials may be located to surround, partially sound or traverse a join or perforation in the shelter wall, or a region wherein the shelter has fixing means, is fixed or is configured to be affixed to a further component, such as to a stake or the like.

Any density of filler materials may be used. The density of filler materials may be consistent across a filler region. Alternatively, the filler density may vary uniformly or non-uniformly across the filler region.

In one arrangement, any suitable filler material may be used, optionally the filler material may be biodegradable. The filler material may be selected from materials comprising: plant materials, yeast starch, bioplastics, biodegradable polymers and processed plant and food products. For example, such materials include, but are not limited to: wood products; including sawdust, wood shavings, wood pellets and the like; plant stems, fibres, derivatives and portions thereof; including grasses, bamboo, hay, straw, jute, hemp, cotton, sisal, hessian, coconut fibres and the like, as well as derivatives or portions thereof; bioplastics, including but not limited to polylactic acid (PLA); flour and flour derivatives; including but not limited to wheat flour, corn flour, rice flour, potato starch, and products comprising such flours, including pasta. As mentioned above, the filler material may be woven or non-woven.

In some arrangements, the plant shelter is a tree shelter, a vine shelter or a shrub shelter, although shelters for other plants may also be envisaged. In preferred embodiments, the plant shelter is a tree shelter.

Where the shelter is a tree shelter the elongate tubular body may be provided by a sheet of bioplastic polyurethane coated woven fabric that is rolled into a tube. The sheet may optionally be rolled so as to produce an overlapped double walled portion along one edge, which may enable the elongate body to expand and/or open when a force is applied, for example when the shelter is applied to a sapling or as the sapling grows.

In some arrangements, the overlapping portion may range from an overlap of from about 1 mm to about 330 mm. Generally, the overlapping portion may be from about 5 mm to about 200 mm, from about 10 mm to about 150 mm, from about 15 mm to about 100 mm, from about 20 mm to about 80 mm, from about 30 mm to about 60mm, and/or from about 40 mm to about 50mm.

In some arrangements, the overlapping portion may be fixed in place to form the tubular body. Any suitable fixing means may be used. The fastening means may be a biodegradable fastening means. Typically, the overlapping portion may be fixed in place by integral tabs and/or slots that align to join the overlapping portion in place. Alternatively, other fixing means may be used, such as the use of stitching, such as cotton stitching, loop and hook systems, ties and other biodegradable fastening means. The tubular body may have a generally circular cross-section, although other cross-sectional shapes can be used such as oval, polygonal, or the like.

A portion of the shelter, such as the overlapping portion, may include a fixing means, such as ties and/or holes to which a stake, such as a wooden stake may be affixed in order to anchor the shelter to the ground. Any suitable fixing means may be used, including rope, ties, chain, wire, clips or the like. Preferably biodegradable, compostable and/or non-toxic materials may be used. This may include one or more of wood, biodegradable bioplastics, natural rope or yarn, such as ropes and yarns made from jute (hemp), cotton, sisal, hessian, or coconut fibre. In other arrangements, metal fixings and/or stakes may be used.

The plant shelters may have any suitable geometry. Typically, the plant shelters may have an inside or outside diameter of from about 5 cm to about 25 cm, such as from about 7 cm to about 20 cm, from about 7 cm to about 12 cm, from about 10 cm to about 18 cm, and/or from about 15 cm to about 20 cm. In addition, the geometries may vary along the length of the tube or between tubes by as much as a few millimetres or centimetres without undermining the properties of the shelter. Shelter heights may vary from about 20 cm to about 150 cm and may commonly be provided with lengths ranging from about 40 cm, 60 cm or 80 cm to about 100 cm, 120 cm or 150 cm and various combinations thereof, *i.e.* from about 40 to about 150 cm, from about 60 to about 120 cm, or from about 80 to about 100 cm.

For tree shelters to be used with tree saplings or vines, shelters having a diameter (inside or outside) of from about 7 cm to about 12 cm may be used, and such shelters may be from 0.6 m to 1.2 m high. Alternatively, shelters for shrubs may be wider, such as from about 10 cm to about 20 cm diameter (inside or outside).

Where taller shelters are required, multiple shelters may be stacked on top each other. Supporting stakes may also be tied or otherwise affixed together and/or a longer stake may be used if required.

In some arrangements, the overlapping portion or a section of the shelter may be joined to form a tube of fixed diameter. In another arrangement, the shelters may further comprise a perforated portion configured to enable the shelter to break away as a plant housed in such a shelter grows and exerts a pressure on the perforated line. This may prevent the shelter from limiting or stunting the growth of the plant. For example, the perforated portion may be a line or section of the shelter.

In one arrangement, the perforated line may traverse the entire height of the shelter. Alternatively, the perforated line may traverse a major portion of the height of the tree shelter, such as from 50%-100% of the height of the tree shelter, 60%-90% of the height of the tree shelter, 70%-80% of the height of the tree shelter, or at least 75% of the height of the tree shelter. Optionally, the perforated line may comprise multiple smaller perforated sections. The perforated line or lines may be of any suitable geometry. Preferably, the perforated line or lines may be linear or may spiral about the shelter.

Bioplastic polyurethane is a polyurethane obtained from a natural, renewable source, such as a natural plant source, and not from a petrochemical source.

Polyurethanes are produced by reacting polyols with a diisocyanate or a polymeric isocyanate in the presence of suitable catalysts and additives in a conventional manner. As such a biosourced polyurethane may comprise a polyol obtained from a plant oil, such as a vegetable oil. Preferably, the polyurethane may be obtained from a pine oil, such as Lawter's Pine-Pol^{™} A220, or cashew nut oil. Other polyurethanes obtained from pine oils may be used, such as but not limited to Pine-Pol^{™} A230 and Pine-Pol^{™} A240. Such polyurethanes may have a low enough level of cross-linking to enable the polyurethane to be biodegradable in an appropriate time frame and to be compostable in an appropriate time frame.

Polyurethanes obtained from pine oils may comprise rosin, such as resin acids, e.g. abietic acid, neoabietic acid, palustric acid, pimaric acid, isopimaric acid and/or dehydroadienic acid, neutral compounds, such as terpenes, and/or fatty acids. In one arrangement, the polyurethane may be formed from a pine oil comprising abietic acid.

Any suitable polymeric isocyanate may be used. The isocyanate may be an isocyanic acid, polymethylenepolyphenylene ester, such as Suprasec^{®} 5025.

The use of bioplastic polyurethane may avoid the build-up of micro- and nano-plastics in the environment.

According to some arrangements, the elongate tubular body comprises from 100 to 200 g/m² of woven cotton fibres, preferably about 150 g/m² woven cotton fibres, *i.e.* from 150 to 200 g/m², or from 120 to 180 g/m², from 140 to 160 g/m² and/or from 145 to 150 g/m² woven cotton fibres. In other arrangements, the elongate tubular body comprises from 100 to 450 g/m² of woven cotton fibres, preferably about 300 g/m² woven cotton fibres, *i.e.* from 125 to 425 g/m², from 150 to 400 g/m², from 175 to 375 g/m², or from 200 to 350 g/m², from 225 to 325 g/m², from 250 to 300 g/m², and/or from 250 to 350 g/m² woven cotton fibres.

According to some arrangements the elongate tubular body comprises from 200 to 400 g/m² of polyurethane, such as from 220 to 380 g/m², from 240 to 360 g/m², from 250 to 350 g/m², from 260 to 340 g/m², from 280 to 320 g/m², or from 290 to 300 g/m², preferably about 300g/m² of polyurethane. Such amounts provide suitable thicknesses of the bioplastic to give the shelter an appropriate strength while enabling a suitable amount of UV light transmission.

According to some arrangements, the elongate tubular body comprises from 20 wt% to 50 wt% woven fibres, such as from 25 wt% to 45 wt %, from 30 wt % to 40 % or from 33 wt% to 35 wt%. Preferably, about 1/3 of the weight of the elongate tubular body comprises woven fibres.

According to a second or further aspect there is provided a biodegradable plant shelter, such as a tree shelter, produced by applying bioplastic polyurethane to a woven fabric layer.

The process may comprise, providing a woven fabric as discussed above and applying a bioplastic polyurethane to one or both sides of the fabric using a knife coating process. The knife coating process may involve providing a stationary knife, in front of which is a bioplastic polyurethane reservoir which continuously supplies the blade with a meniscus of polyurethane. The fabric is then drawn past the blade at a constant distance based on the viscosity of the polyurethane such that a large area of fabric may be uniformly coated with the static blade ensuring an even coating and removing any excess polyurethane. The polyurethane is then cured or dried to yield a bioplastic coated sheet of woven fabric.

The sheet may then be cut and shaped to produce the plant shelters. Optionally, one or more windows may be provided in the sheet to permit airflow through the shelter and/or increase UV light permittivity. Typically, shelters may be produced which do not include windows in the lower quarter, third or half of the shelter height, to reduce the risk of damage to the plant by agrochemicals, such as herbicides and the like which may conventionally be sprayer at or close to ground level.

According to a third or further aspect of the invention, there is provided biodegradable woven sheet comprising a matrix of woven natural fibres embedded in bioplastic polyurethane for use in a plant shelter according to the first or second or further aspect as defined above.

The provision of a flat sheet of woven material may be more easily transported to an area of use. In addition, the sheet may be used to produce plant shelter having different sizes or geometries for different applications. In one arrangement, the sheet may be "cut-to-size" for individual projects. For example and extended portion of such fabric may be used to protect multiple plants.

In some embodiments the woven sheet may comprise a means for affixing portions of the sheet together to form an elongate tube. Affixing means to produce other geometries may also be envisaged.

Any suitable affixing means may be provided, for example, the woven sheet may be provided with one or more integral tabs and/or slots which, upon folding or rolling may become aligned and used to join portions of the woven sheet together. Other fixing means may also be envisaged, such as the uses of cotton stitching, loop and hook systems, ties and other biodegradable fastening means.

According to a fourth or further aspect, there is provided a kit comprising a biodegradable plant shelter according to either of the first two aspects or further aspects or a woven sheet of the third aspect or any other aspect set out above, wherein the kit further comprises a stake and one or more fixing means for affixing the stake to the shelter. The stake may support the shelter and may also be driven partially into the ground to maintain the shelter at the desired location.

The stake may be formed from any suitable material. In one arrangement, the stake and fixing means may be formed from materials which will not pollute the environment. They may include biodegradable, preferably compostable, materials such as wood, biodegradable bioplastics, natural rope or yarn, such as ropes and yarns made from jute (hemp), cotton, sisal, hessian, or coconut fibre. In other arrangements, metal fixings and/or stakes may be supplied. In a further arrangement, wooden stakes may be used.

Any suitable fixing means may be used. In one arrangement, the fixing means may be selected from the list comprising: cable ties, plastic ties, rope, staples, or a combination thereof. In another arrangement, the fixing means may be rope or staples. The materials may be as defined above.

In one arrangement, the fixing means may be integrally provided as part of the tree shelter. For example, the fixing means may form part of the tree shelter wall. Specifically, the fixing means may be formed from integral tabs, loops, cut-out or perforated portions, slits and the like or any mixture thereof.

According to a fifth or further aspect, there is provided the use of a biodegradable plant shelter or kit according to any of the preceding aspects, for sheltering a plant, preferably a tree, vine or shrub, or combinations thereof.

Preferred embodiments of the invention will now be described in greater detail, by way of example only, with reference to the accompanying figures, in which:
- Figure 1: depicts a sample of a tree shelter comprising a tubular wall according to the present invention.
- Figure 2: depicts an unmounted sheet of material according to aspects of the present invention which may be used to form the tubular wall according to further aspects of the present invention.
- Figures 3A & 3B: depict the sheet of Figure 2 rolled to form the tubular wall and, with and without a support respectively.
- Figure 4: depicts a top view of a tree shelter according to the present invention.
- Figure 5: provides a flow diagram identifying the steps for producing an elongate tubular wall for use in the claimed invention.

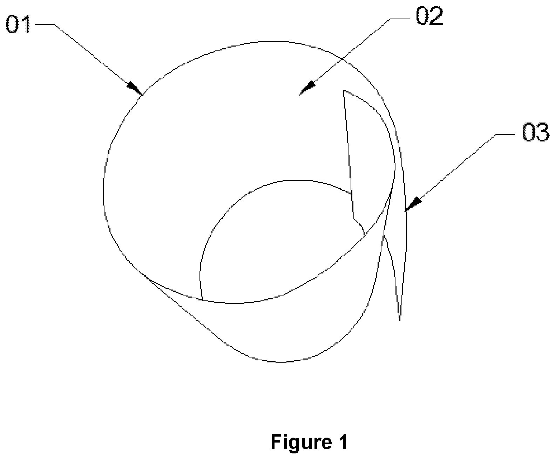

As depicted in Figure 1, the present invention provides a shelter 1, which may be a tree shelter. The shelter comprises an elongate tube 2 formed by a wall which comprises a layer of woven natural fibres and a bioplastic polyurethane. Any suitable fibres may be used, preferably cotton.

The wall comprises an overlap region 3 which enables the product to be easily opened and placed round a sapling or the like, while ensuring that once in place the entire circumference of the sapling is protected without the need of sealing or closing edges of the shelter. In addition, the overlap may enable the shelter to expand if required as the sapling grows.

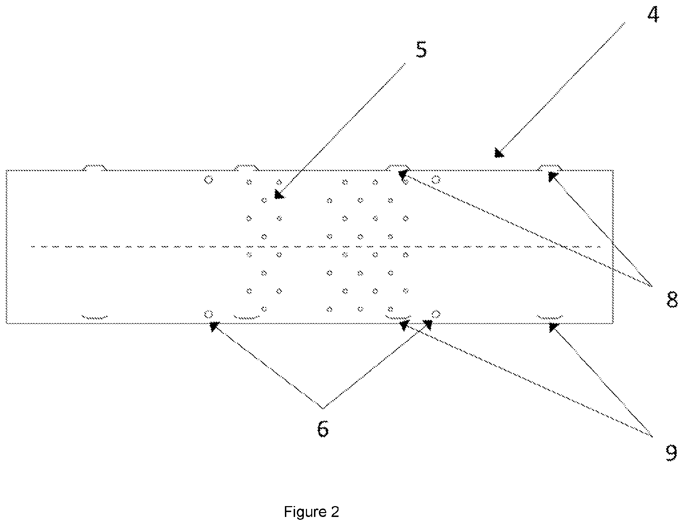

The elongate tube 2 is formed from a sheet 4, comprising a layer of woven natural fibres and a bioplastic polyurethane which is depicted in Figure 2. Sheet 4 is provided with a series of apertures 5 configured to permit more light to traverse the wall to be utilised by a plant which may be planted within the shelter. As shown in Figure 2, the apertures are positioned in an ordered arrangement across the height of the sheet, and are located in specific areas which may be aligned when the sheet 4 is rolled to form the elongate tube 2. Other arrangements, numbers and geometries of apertures 5 may be envisaged. Optionally, the apertures may be absent. The formed elongate tube may further comprise a line of perforation extending along the height of the shelter in use, configured to permit the shelter to break away as a plant housed therein grows, thereby avoiding stunting growth of the plant.

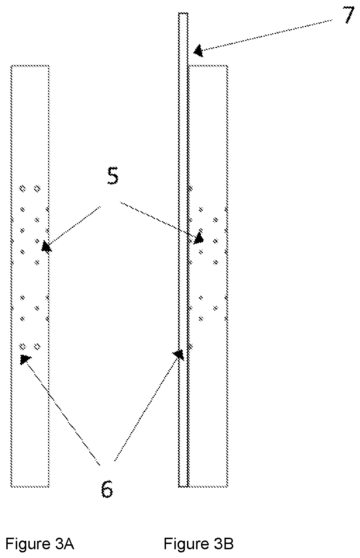

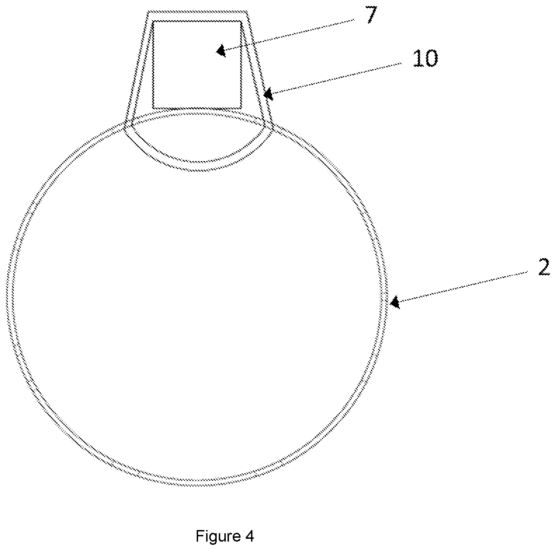

Sheet 4 also comprises a series of larger apertures 6 configured to enable the sheet to be mounted to a stake 7 depicted in Figures 3B and 4. Other arrangements, numbers and geometries of apertures 6 may be envisaged. Optionally, the apertures may be absent.

The sheet 4 may further comprises tabs 8 and slots 9 into which the tab may be slid to secure the overlapping portions of the wall in use to form the elongate tube. Alternative fixing means may also be envisaged.

Once rolled, sheet 4 produces the elongate tube depicted in Figure 3A which may be staked to the ground as shown in Figure 3B. Where a kit is provided it may be preferable to provide a stake which is taller than the tree shelter wall to ensure that the shelter is supported along the length of its height.

In the embodiment shown in Figures 3A and 3B, when rolled to form a tube, any mounting apertures are located about a common axis so as to be suitably placed to affix the tube to a single stake.

In use, the stake 7 may be tied of otherwise affixed to the tube to provide a broadly cylindrical growing region with a stake affixed to the outside of the elongate tube 2 as depicted in Figure 4. The tie 10 may be a cable tie, plastic tie, rope, chain or the like. Other fixing means may also be used. Alternatively, it may be appropriate to utilise more than one stake and/or more than four mounting apertures 6 in order to provide for more robust affixing of the tree shelter.

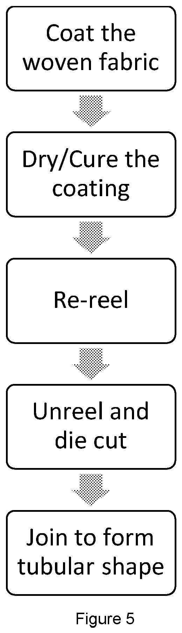

As set out in Figure 5, the elongate tube 2 is formed by first coating the woven fabric with a bioplastic polyurethane which is then cured or dried. Once set the coated fabric can be reeled for storage, transport or the like. To make the elongate tube, the reeled fabric is die cut to produce a sheet 4 of an appropriate size. Apertures 5 and 6, as well as tabs and slots 8 and 9 may optionally also be cut. Once the sheet 4 is prepared, the sheet 4 can be rolled to produce an elongate tube 2. The tube is then joined to prevent it from unravelling. One option for joining the tube is to affix a stake 7 to the rolled sheet 4, wherein the mounting apertures 6 prevent unrolling of the sheet 4 once the stake is tied to the sheet through the mounting apertures.

It will be appreciated that any of the optional features of any of the embodiments described herein could also be provided with one or more of any of the other embodiments described herein.

As used herein any reference to "one embodiment" or "an embodiment" means that a particular element, feature, structure, or characteristic described in connection with the embodiment is included in at least one embodiment. The appearances of the phrase "in one embodiment" or the phrase "in an embodiment" in various places in the specification are not necessarily all referring to the same embodiment.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the invention. This is done merely for convenience and to give a general sense of the invention.

This description should be read to include one or at least one and the singular also includes the plural unless it is obvious that it is meant otherwise.

The use of the term "about" in relation to a numerical value shall be understood as encompassing any value which would round to the stated numerical value when rounded to the last significant figure, unless stated otherwise.

In view of the foregoing description it will be evident to a person skilled in the art that various modifications may be made within the scope of the invention. For example, although an embodiment has been described with reference to a particular polymeric material and/or textile, alternative species may be used.

The scope of protection of the invention is defined by the appended claims.

### Definitions

The term polyol will be understood to be an organic compound comprising multiple, *i.e.* two or more, hydroxyl groups, while an isocyanate shall be understood to be an organic compound comprise a functional group having the formula R-N=C=O, wherein the R group may be an organic based group.

The term degradable will be understood to mean a material capable of being disintegrated into smaller pieces by the action of UV light, moisture and/or by bacteria or other living organisms, resulting in the production of microplastics and nanoplastics.

The term biodegradable will be understood to mean a material capable of being disintegrated by the action of naturally occurring bacteria or other living organisms, microbes or insects and become assimilated into the natural environment. Ultimately, biodegradable materials will break down into carbon dioxide, water and biomass although, during the disintegration of biodegradable plastics microplastics and nanoplastics may initially be produced and the process may take many years or decades to complete.

The term compostable will be understood to mean a material that will biodegrade in a composting environment within to produce a harmless "soil" which may be healthy for plant growth. Typically, compostable materials will biodegrade within a year in a composting environment. However, where products are initially in a more open environment, degradation may be slower.

The term metric will be understood to relate to the length of a fibre relative to its weight, wherein the metric count = (length m/1000 m) x (1 kg/weight kg).

## Claims

1. A plant shelter (1), comprising:
an elongate tubular body (2) having a wall formed from a biodegradable material comprising:
a matrix of natural fibres; and
a bioplastic polyurethane in which the fibres are held;
**characterised in that** the matrix of natural fibres comprises a woven layer.

2. A plant shelter according to claim 1 wherein:
i) the woven layer forms a woven fabric layer; and/or
ii) the biodegradable material is translucent or transparent, such that the wall of the shelter has greater than 50% light transparency; and/or
iii) the wall has a thickness of from about 0.75 mm to about 1.5 mm, or from about 0.75 mm to about 1.0 mm; and/or
iv) the plant shelter is a tree shelter, a vine shelter or a shrub shelter, preferably a tree shelter.

3. A plant shelter according to any preceding claim, wherein the woven layer comprises cotton fibres, jute fibres, hemp fibres, or combinations thereof, optionally wherein the woven layer comprises cotton fibres, optionally
wherein the cotton fibres comprise from 40 to 80 strands per inch in the warp and from 40 to 80 strands per inch in the weft, preferably wherein the woven cotton comprises 60 strands per inch in the warp and 60 strands per inch in the weft.

4. A plant shelter according to claim 3, wherein the cotton fibres are 60/60 loomstate cotton.

5. A plant shelter according to any preceding claim, wherein the elongate tubular body comprises from 100 to 450 g/m² of woven cotton fibres, preferably about 150 g/m² woven cotton fibres or 250-350 g/m² woven cotton fibres, optionally
wherein the cotton fibres comprise from 40 to 80 strands per inch in the warp and from 40 to 80 strands per inch in the weft, preferably wherein the woven cotton comprises 60 strands per inch in the warp and 60 strands per inch in the weft.

6. A plant shelter according to any of claims 3-5, wherein the cotton has a 20/20 plain weave.

7. A plant shelter according to any preceding claim, wherein the bioplastic polyurethane is derived from a natural plant source, for example a pine nut based polyol or a cashew nut based polyol.

8. A plant shelter according to any preceding claim, wherein the elongate tubular body comprises:
i) from 200 to 400 g/m² of bioplastic polyurethane, preferably about 300g/m² of polyurethane; and/or
ii) from 20 wt% to 50 wt% of the woven layer, preferably wherein about 1/3 of the weight of the elongate tubular body comprises the woven layer.

9. A plant shelter according to any preceding claim, wherein the natural fibre is cotton and the bioplastic polyurethane is a polyol derived from pine or cashew plants, such as from pine oil.

10. A plant shelter according to any preceding claim, wherein:
i) the wall is formed by applying the bioplastic polyurethane to the woven fabric layer; and/or
ii) the shelter wall comprises one or more filler materials, optionally wherein the one or more filler materials is biodegradable; and/or
iii) the shelter wall comprises one or more perforated lines, optionally wherein the perforated lines are configured to traverse at least 75% of the height of the shelter wall.

11. A biodegradable woven sheet (4) comprising a matrix of woven natural fibres embedded in bioplastic polyurethane for use in a plant shelter according to any preceding claim.

12. A biodegradable woven sheet according to claim 11 wherein the woven sheet comprises a means for affixing portions of the sheet together to form an elongate tube, optionally
wherein the affixing means comprise one or more integral tabs (8), slots (9), cotton stitching, or biodegradable fastenings

13. A kit comprising a plant shelter according to claim 1-10 or a biodegradable woven sheet according to any one of claims 11-12, wherein the kit further comprises a stake (7) and one or more fixing means (10) for affixing the stake to a plant.

14. A kit according to claim 13, wherein:
i) the stake and fixing means are biodegradable, preferably compostable; or
ii) the at least one of the stakes or fixing means is formed from materials comprising at least one of wood, metal, natural rope or yarn.

15. Use of a plant shelter, biodegradable woven sheet or kit according to any preceding claim to shelter a plant, preferably a tree, vine or shrub.

## Patentansprüche

1. Pflanzenschutz (1), der Folgendes umfasst:
einen länglichen Rohrkörper (2), der eine Wand aufweist, die aus einem biologisch abbaubaren Material gebildet ist, das Folgendes umfasst:
eine Matrix aus natürlichen Fasern; und
ein bioplastisches Polyurethan, in dem die Fasern gehalten werden;
**dadurch gekennzeichnet, dass** die Matrix aus natürlichen Fasern eine gewebte Schicht umfasst.

2. Pflanzenschutz nach Anspruch 1, wobei:
i) die gewebte Schicht eine gewebte Stoffschicht bildet; und/oder
ii) das biologisch abbaubare Material durchscheinend oder durchsichtig ist, sodass die Wand des Schutzes eine Lichtdurchlässigkeit von größer als 50 % aufweist;
und/oder
iii) die Wand eine Dicke von etwa 0,75 mm bis etwa 1,5 mm oder von etwa 0,75 mm bis etwa 1,0 mm aufweist; und/oder
iv) der Pflanzenschutz ein Baumschutz, ein Rebschutz oder ein Strauchschutz, bevorzugt ein Baumschutz ist.

3. Pflanzenschutz nach einem vorstehenden Anspruch, wobei die gewebte Schicht Baumwollfasern, Jutefasern, Hanffasern oder Kombinationen davon umfasst, optional wobei die gewebte Schicht Baumwollfasern umfasst, optional
wobei die Baumwollfasern von 40 bis 80 Fäden pro Zoll in der Kette und von 40 bis 80 Fäden pro Zoll in dem Schuss umfassen, bevorzugt wobei die gewebte Baumwolle 60 Fäden pro Zoll in der Kette und 60 Fäden pro Zoll in dem Schuss umfasst.

4. Pflanzenschutz nach Anspruch 3, wobei die Baumwollfasern 60/60-Loomstate-Baumwolle sind.

5. Pflanzenschutz nach einem vorstehenden Anspruch, wobei der längliche Rohrkörper von 100 bis 450 g/m² von gewebten Baumwollfasern, bevorzugt etwa 150 g/m² gewebte Baumwollfasern oder 250-350 g/m² gewebte Baumwollfasern umfasst, optional
wobei die Baumwollfasern von 40 bis 80 Fäden pro Zoll in der Kette und von 40 bis 80 Fäden pro Zoll in dem Schuss umfassen, bevorzugt wobei die gewebte Baumwolle 60 Fäden pro Zoll in der Kette und 60 Fäden pro Zoll in dem Schuss umfasst.

6. Pflanzenschutz nach einem der Ansprüche 3-5, wobei die Baumwolle eine 20/20-Leinwandbindung aufweist.

7. Pflanzenschutz nach einem vorstehenden Anspruch, wobei das bioplastische Polyurethan von einer natürlichen Pflanzenquelle stammt, beispielsweise einem Pinienkernbasierten Polyol oder einem Cashewkern-basierten Polyol.

8. Pflanzenschutz nach einem vorstehenden Anspruch, wobei der längliche Rohrkörper Folgendes umfasst:
i) von 200 bis 400 g/m² von bioplastischem Polyurethan, bevorzugt etwa 300 g/m² Polyurethan; und/oder
ii) von 20 Gew.-% bis 50 Gew.-% der gewebten Schicht, bevorzugt wobei etwa 1/3 des Gewichts des länglichen Rohrkörpers die gewebte Schicht umfasst.

9. Pflanzenschutz nach einem vorstehenden Anspruch, wobei die natürliche Faser Baumwolle ist und das bioplastische Polyurethan ein Polyol ist, das von Pinien- oder Cashew-Pflanzen stammt, wie zum Beispiel von Pinienöl.

10. Pflanzenschutz nach einem vorstehenden Anspruch, wobei:
i) die Wand durch Auftragen des bioplastischen Polyurethans auf die gewebte Stoffschicht gebildet wird; und/oder
ii) die Schutzwand ein oder mehrere Füllstoffmaterialien umfasst, optional wobei das eine oder die mehreren Füllstoffmaterialien biologisch abbaubar sind; und/oder
iii) die Schutzwand eine oder mehrere perforierte Linien umfasst, optional wobei die perforierten Linien konfiguriert sind, um mindestens 75 % der Höhe der Schutzwand zu überspannen.

11. Biologisch abbaubare gewebte Lage (4), die eine Matrix aus gewebten natürlichen Fasern umfasst, die in bioplastischem Polyurethan eingebettet sind, zur Verwendung in einem Pflanzenschutz nach einem vorstehenden Anspruch.

12. Biologisch abbaubare gewebte Lage nach Anspruch 11, wobei die gewebte Lage ein Mittel zur zusammenfügenden Befestigung von Teilen der Lage umfasst, um ein längliches Rohr zu bilden, optional
wobei die Befestigungsmittel ein/e/n oder mehrere integrierte Laschen (8), Schlitze (9), Baumwollnähte oder biologisch abbaubare Verschlussmittel umfassen.

13. Kit, der einen Pflanzenschutz nach Anspruch 1-10 oder eine biologisch abbaubare gewebte Lage nach einem der Ansprüche 11-12 umfasst, wobei der Kit weiter einen Pfahl (7) und ein oder mehrere Fixierungsmittel (10) zur Befestigung des Pfahls an einer Pflanze umfasst.

14. Kit nach Anspruch 13, wobei:
i) der Pfahl und das Fixierungsmittel biologisch abbaubar, bevorzugt kompostierbar sind; oder
ii) das mindestens eine der Pfähle oder Fixierungsmittel aus Materialien gebildet ist, die mindestens eines von Holz, Metall, Naturseil oder -garn umfassen.

15. Verwendung eines Pflanzenschutzes, einer biologisch abbaubaren gewebten Lage oder eines Kits nach einem vorstehenden Anspruch zum Schutz einer Pflanze, bevorzugt eines Baums, einer Rebe oder eines Strauchs.

## Revendications

1. Abri pour plantes (1), comprenant :
un corps tubulaire allongé (2) présentant une paroi formée d'un matériau biodégradable comprenant :
une matrice de fibres naturelles ; et
un polyuréthane bioplastique dans lequel les fibres sont retenues ;
**caractérisé en ce que** la matrice de fibres naturelles comprend une couche tissée.

2. Abri pour plantes selon la revendication 1, dans lequel :
i) la couche tissée forme une couche de tissu tissé ; et/ou
ii) le matériau biodégradable est translucide ou transparent, de sorte que la paroi de l'abri présente une transparence à la lumière supérieure à 50% ; et/ou
iii) la paroi présente une épaisseur allant d'environ 0,75 mm à environ 1,5 mm, ou d'environ 0,75 mm à environ 1,0 mm ; et/ou
iv) l'abri pour plantes est un abri pour arbre, un abri pour vigne ou un abri pour arbuste, de préférence un abri pour arbre.

3. Abri pour plantes selon l'une quelconque des revendications précédentes, dans lequel la couche tissée comprend des fibres de coton, des fibres de jute, des fibres de chanvre, ou des combinaisons de celles-ci, où éventuellement la couche tissée comprend des fibres de coton, éventuellement
où les fibres de coton comprennent de 40 à 80 brins par pouce dans la chaîne et de 40 à 80 brins par pouce dans la trame, de préférence où le coton tissé comprend 60 brins par pouce dans la chaîne et 60 brins par pouce dans la trame.

4. Abri pour plantes selon la revendication 3, dans lequel les fibres de coton sont un coton grège 60/60.

5. Abri pour plantes selon l'une quelconque des revendications précédentes, dans lequel le corps tubulaire allongé comprend de 100 à 450 g/m² de fibres de coton tissées, de préférence environ 150 g/m² de fibres de coton tissées ou 250-350 g/m² de fibres de coton tissées, éventuellement
où les fibres de coton comprennent de 40 à 80 brins par pouce dans la chaîne et de 40 à 80 brins par pouce dans la trame, de préférence où le coton tissé comprend 60 brins par pouce dans la chaîne et 60 brins par pouce dans la trame.

6. Abri pour plantes selon l'une quelconque des revendications 3-5, dans lequel le coton présente une toile unie 20/20.

7. Abri pour plantes selon l'une quelconque des revendications précédentes, dans lequel le polyuréthane bioplastique est dérivé d'une source végétale naturelle, par exemple un polyol à base de pignons de pin ou un polyol à base de noix de cajou.

8. Abri pour plantes selon l'une quelconque des revendications précédentes, dans lequel le corps tubulaire allongé comprend :
i) de 200 à 400 g/m² de polyuréthane bioplastique, de préférence environ 300 g/m² de polyuréthane ; et/ou
ii) de 20% en poids à 50% en poids de la couche tissée, de préférence où environ 1/3 du poids du corps tubulaire allongé est constitué par la couche tissée.

9. Abri pour plantes selon l'une quelconque des revendications précédentes, dans lequel la fibre naturelle est du coton et le polyuréthane bioplastique est un polyol dérivé de pins ou de cajous, tel que d'huile de pin.

10. Abri pour plantes selon l'une quelconque des revendications précédentes, dans lequel :
i) la paroi est formée par application du polyuréthane bioplastique sur la couche de tissu tissé ; et/ou
ii) la paroi de l'abri comprend un ou plusieurs matériaux de remplissage, éventuellement où les un ou plusieurs matériaux de remplissage sont biodégradables ; et/ou
iii) la paroi de l'abri comprend une ou plusieurs lignes perforées, éventuellement où les lignes perforées sont configurées pour traverser au moins 75% de la hauteur de la paroi de l'abri.

11. Nappe tissée biodégradable (4) comprenant une matrice de fibres naturelles tissées retenues dans du polyuréthane bioplastique, destinée à une utilisation dans un abri pour plantes selon l'une quelconque des revendications précédentes.

12. Nappe tissée biodégradable selon la revendication 11, la nappe tissée comprenant un moyen permettant de fixer des parties de la nappe les unes aux autres afin de former un tube allongé, éventuellement
où le moyen de fixation comprend une ou plusieurs languettes intégrées (8), fentes (9), coutures en coton ou attaches biodégradables.

13. Kit comprenant un abri pour plantes selon les revendications 1-10 ou une nappe tissée biodégradable selon l'une quelconque des revendications 11-12, le kit comprenant en outre un tuteur (7) et un ou plusieurs moyens de fixation (10) destinés à fixer le tuteur à une plante.

14. Kit selon la revendication 13, dans lequel :
i) le tuteur et les moyens de fixation sont biodégradables, de préférence compostables ; ou
ii) le au moins un parmi les tuteurs ou les moyens de fixation est formé à partir de matériaux comprenant au moins l'un parmi du bois, du métal, de la corde naturelle ou du fil.

15. Utilisation d'un abri pour plantes, d'une nappe tissée biodégradable ou d'un kit selon l'une quelconque des revendications précédentes pour abriter une plante, de préférence un arbre, une vigne ou un arbuste.
